# FASCICULE DE BREVET EUROPEEN

(11) **EP 1 255 687 B1**
(45) Date de publication et mention de la délivrance du brevet: **28.09.2005**
(21) Numéro de dépôt: 00906422.1
(22) Date de dépôt: 17.02.2000
(51) Int. Cl.: B65G 51/03

(54) **CONVOYEUR A AIR EQUIPE D'UN GUIDE INFERIEUR**
LUFTFÖRDERER MIT EINER UNTEREN FÜHRUNG
PNEUMATIC CONVEYOR EQUIPPED WITH BOTTOM GUIDE

(43) Date de publication de la demande: 13.11.2002
(73) Titulaire: Netra Systems, 59700 Marcq en Baroeul (FR)
(72) Inventeur: TRENEL, Joel, F-59700 Marcq en Baroeul (FR); RODRIGUES, Carlos, F-59800 Lille (FR)
(74) Mandataire: Matkowska, Franck
(86) Numéro de dépôt international: PCT/FR2000/000405
(87) Numéro de publication internationale: WO 2001/060724

(56) Documents cités:
- FR-A- 2 781 470
- US-A- 5 246 314
- US-A- 5 421 678
- US-A- 5 484 237
- US-A- 5 542 789

## Description

La présente invention concerne le domaine du transport pneumatique d'articles suspendus, et plus particulièrement d'articles légers tels que par exemple des bouteilles ou flacons vides en plastique, des préformes etc.

Pour transporter des articles légers, et plus particulièrement des bouteilles plastiques ou similaires, il est à ce jour connu d'utiliser des convoyeurs à air équipés de moyens de soufflage permettant de créer une pluralité de jets d'air orientés sur les articles dans leur direction de transport.

Pour les articles qui peuvent être suspendus, tels que par exemple des bouteilles en plastique comportant au niveau de leur col une collerette, on utilise plus particulièrement des convoyeurs à air qui sont équipés d'un rail de guidage, plus communément appelé guide sous-col, le long duquel les articles sont guidés et transportés en étant suspendus par l'intermédiaire de leur collerette ou similaire. Ce type de convoyeur est décrit par exemple dans le brevet US-A-4,284,370 ou encore dans le brevet US-A-5,161,919. Il met en oeuvre une gaine d'air principale, communément appelée *plenum* et s'étendant le long du trajet des articles, et un canal de soufflage communiquant avec la gaine d'air principale par l'intermédiaire de fentes de soufflage ou similaire. La gaine principale est alimentée en air par exemple au moyen de plusieurs ventilateurs judicieusement répartis sur toute sa longueur ; cet air est évacué par les fentes de soufflage sous la forme d'une pluralité de jets d'air permettant de propulser les articles le long du canal de soufflage. Dans le brevet US-A-4,284,370, le canal de soufflage a une section rectangulaire et les fentes de soufflage sont disposées au-dessus du rail de guidage, ce qui permet de propulser les articles en soufflant au-dessus de leur collerette. Dans le brevet US-A-5,161,919, le canal de soufflage a la forme d'un V inversé, et les fentes de soufflage sont disposées au-dessous du rail de guidage, ce qui permet de propulser les articles en soufflant sous leur collerette.

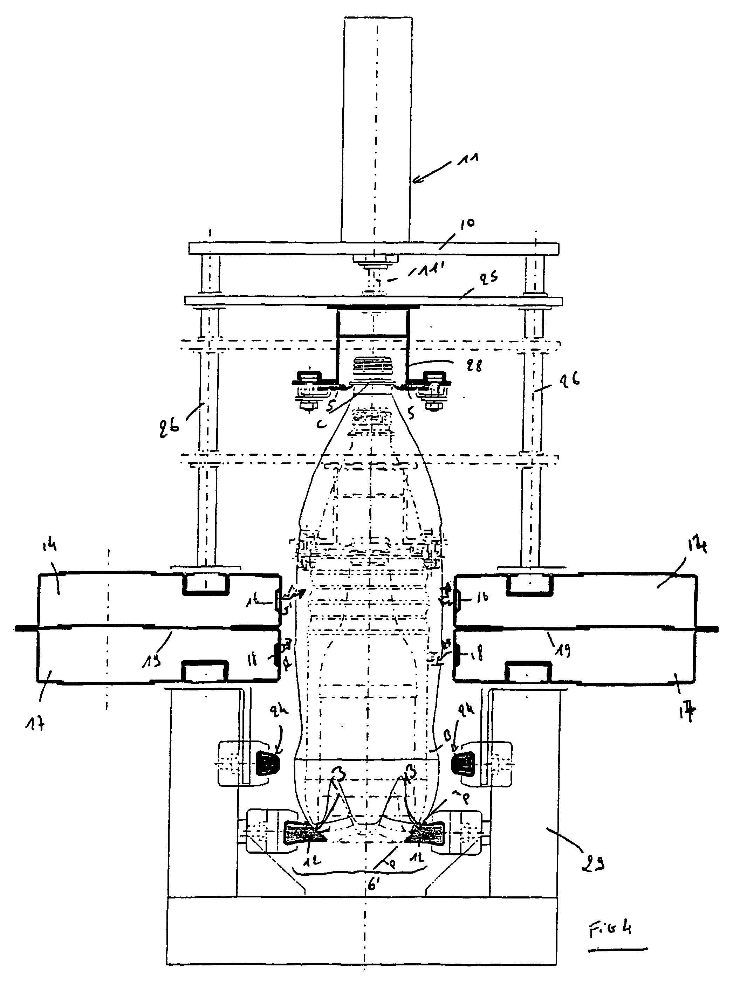

Au cours de leur transport, les articles suspendus, par exemple par l'intermédiaire de leur collerette, peuvent basculer latéralement par rapport à la direction longitudinale de convoyage, notamment dans les parties courbes (virages) du convoyeur. Pour limiter ce débattement latéral des articles, il est courant à ce jour d'équiper les convoyeurs à air avec des guides latéraux, disposés de part et d'autre du trajet des articles, l'écartement entre les guides latéraux conditionnant l'angle de débattement latéral maximum des articles. Egalement au cours de leur transport, les bouteilles ont tendance à osciller longitudinalement par rapport à la verticale selon un mouvement aitematif avant/arrière, qui nuit à la qualité de convoyage, et qui en outre occasionne des risques de blocage des articles, tels que par exemple un blocage avant ou arrière. Pour pallier aux oscillations avant/arrière des articles, on a déjà à ce jour proposé dans le brevet US-A-5,421,678 d'équiper un convoyeur à air avec au moins une brosse longitudinale qui s'étend le long du trajet des articles, et qui permet d'appliquer en continu sur les articles en cours de transport une force de freinage telle que les articles sont transportés de manière stable en étant inclinés par rapport à la verticale et vers l'arrière par rapport au sens de transport d'un angle donné, dit par la suite angle de convoyage. Plus particulièrement, dans la variante de réalisation illustrée sur la figure 4 de cette publication, le convoyeur est équipé de deux paires inférieure et supérieure de guides latéraux référencés 42 et 44 pour limiter le débattement latéral des articles, et est équipé d'une brosse référencée 60 et fixée sur l'un des deux guides latéraux inférieurs 44. Un premier inconvénient de cette solution est que l'angle de convoyage dépend notamment de la vitesse de convoyage et de la matière des bouteilles ; en outre, il n'est pas possible de garantir un angle de convoyage minimum. Un deuxième inconvénient est qu'on constate à l'usage une usure dans le temps des poils de brosse et surtout une orientation préférentielle des poils causée par le contact répété avec les articles, ce qui aboutit à une modification dans le temps de l'angle de convoyage des articles. II est donc nécessaire pour conserver le bon angle de convoyage de rectifier régulièrement la distance entre les poils de brosses et le corps des articles, et à la longue de remplacer les brosses usagées.

La présente invention a pour but principal de proposer une nouvelle solution qui permet également d'améliorer la convoyabilité des articles suspendus transportés dans un convoyeur à air, en palliant aux problèmes d'oscillation avant/arrière et de débattement latéral des articles suspendus en cours de transport, mais qui ne présente pas les inconvénients précités de la solution retenue dans le brevet US-A-5,421,678.

Ce but est atteint par le convoyeur à air de la revendication 1 et le procédé de transport de la revendication 19.

Les moyens de formation des jets d'air de transport pour la propulsion des articles le long du convoyeur sont conçus en sorte de générer au moins des jets d'air inférieurs qui sont dirigés sur les articles au dessous de leur point de sustentation. Antérieurement à l'invention, la mise en oeuvre de jets d'air de transport inférieurs, venant s'appliquer sur une portion des articles située en dessous de leur point de sustentation, était une source d'instabilité importante des articles transportés, en particulier dans le cas où les articles transportés étaient suspendus par l'intermédiaire d'une zone porteuse située nettement au dessus de leur centre de gravité, ce qui est le cas par exemple des bouteilles plastiques transportées en étant suspendues par l'intermédiaire d'une protubérance au niveau de leur col. On était donc contraint jusqu'à ce jour dans ce type de convoyeur, pour limiter les risques d'instabilité des articles, sans toutefois les supprimer, de limiter la puissance des jets d'air de transport inférieurs et/ou de positionner ces jets de transport inférieurs au plus près du point de sustentation des articles, et ce au détriment de la vitesse de convoyage. La mise en oeuvre d'un guide longitudinal inférieur conforme à l'invention permet avantageusement de pallier cet inconvénient, car ce guide permet d'assurer un transport des articles en position inclinée vers l'arrière, et ainsi d'éviter tout basculement vers l'avant des articles sous l'action des jets d'air de transport inférieurs. Il devient ainsi possible d'augmenter la puissance des jets d'air de transport inférieurs et/ou d'appliquer ces jets d'air de transport inférieurs sur une portion quelconque des articles situés au dessous de leur point de sustentation, sans nuire à la stabilité de convoyage des articles.

D'autres caractéristiques et avantages de l'invention apparaîtront plus clairement à la lecture de la description ci-après de trois variantes de réalisation d'un convoyeur à air conformes à l'invention, laquelle description est donnée à titre d'exemple non limitatif et en référence aux dessins annexés sur lesquels :
- la figure 1 est une représentation schématique en coupe d'une première variante de réalisation d'un convoyeur à air avec guide longitudinal inférieur en V multi-positions,
- la figure 2 est une représentation schématique vue de côté du convoyeur de la figure 1,
- la figure 3 est une représentation en coupe d'une deuxième variante de réalisation d'un convoyeur à air selon l'invention,
- la figure 4 est une représentation schématique en coupe d'une troisième variante de réalisation d'un convoyeur à air selon l'invention.

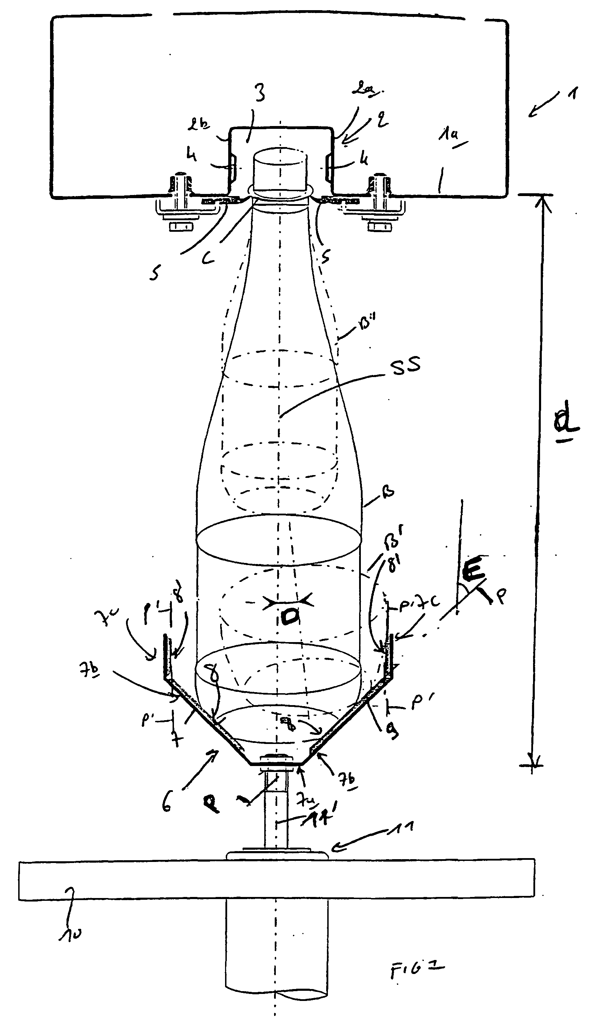

On a représenté à la figure 1 une première variante de réalisation d'un convoyeur à air utilisé pour le transport, sous l'action de jets d'air, de bouteilles en plastique vides B. De manière usuelle, ce convoyeur à air comporte une gaine de soufflage principale 1 qui est prévue pour être alimentée en air sous pression au moyen de ventilateurs (non représentés) régulièrement répartis le long de la gaine 1.

La paroi inférieure 1a de la gaine de soufflage 1 forme en partie centrale un décrochement 2 délimitant un canal de soufflage 3. Dans les parois latérales 2a et 2b du décrochement 2 sont ménagées des fentes de soufflage 4, qui permettent l'échappement de l'air sous pression depuis l'intérieur de la gaine 1 vers l'intérieur du canal soufflage 3 sous la forme d'une pluralité de jets d'air orientés en direction des bouteilles au dessus de leur point de sustentation. Les fentes de soufflage 4 seront par exemple régulièrement réparties sur toute la longueur du canal de soufflage 3. Pour la sustentation des bouteilles, le convoyeur à air est équipé de deux guides sous col 5 fixés sur la paroi inférieure 1a de la gaine de soufflage 1, et qui définissent un rail de sustentation et de guidage des bouteilles B le long du convoyeur.

Dans l'exemple particulier illustré sur la figure 1, on a représenté une bouteille B suspendue sur les deux rails de guidage 5 par l'intermédiaire de sa collerette C. Cette mise en oeuvre n'est pas limitative de l'invention. Dans d'autres variantes de réalisation, la zone de sustentation des bouteilles n'est pas nécessairement constituée par leur collerette mais peut-être constituée par exemple par toute protubérance ou autre moyen équivalent au niveau d'une partie quelconque de leur corps.

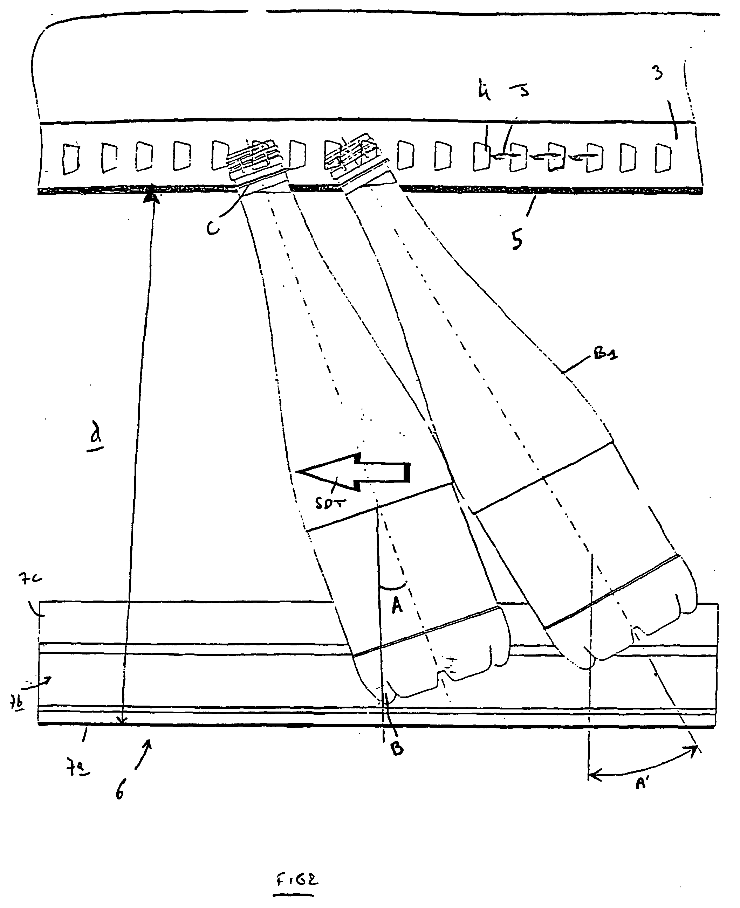

Lorsque la gaine de soufflage 1 est alimentée en air sous pression, cet air sous pression s'échappe par les fentes 4 sous la forme d'une pluralité de jets d'air J (figure 2) qui sont générés au dessus de la collerette des bouteilles B, et qui permettent de propulser ces bouteilles le long des deux rails de guidage 5 dans un sens de transport donné schématisé par la flèche SDT sur la figure 2.

Selon une caractéristique essentielle et nouvelle de l'invention, le convoyeur à air des figures 1 et 2 est équipé d'un guide longitudinal inférieur 6, qui s'étend le long du trajet des bouteilles, et qui dans l'exemple illustré a sensiblement en section la forme d'un V. Dans l'exemple particulier illustré, ce guide longitudinal inférieur 6 est formé par une tôle pliée 7 comportant un fond 7a se prolongeant de part et d'autre et de manière symétrique par deux parois longitudinales inclinées 7b en vis à vis, dites par la suite parois de guidage, chacune des deux parois de guidage 7b se prolongeant en partie supérieure par un bord supérieur 7c.

Ce guide longitudinal inférieur 6 est monté sur le convoyeur à l'aplomb et au dessous des deux rails de guidage 5 de telle sorte que l'axe de symétrie de ce rail de guidage soit confondu avec l'axe de symétrie SS du convoyeur, c'est à dire essentiellement l'axe de symétrie entre les deux rails de guidage 5. Ce rail de guidage 6 s'étend en outre sur toute ou partie de la longueur du convoyeur.

Dans l'exemple de réalisation de la figure 1, le guide longitudinal inférieur 6 forme, au niveau de la face interne 8 de chaque paroi de guidage longitudinal 7b, un plan PP incliné par rapport à la verticale d'un angle E. Les deux plans PP formés par chaque paroi de guidage 7b convergent l'un vers l'autre vers le bas. Le guide 6 forme également au niveau de la face interne 8' de chaque bord d'extrémité 7c un plan P'P' sensiblement vertical. Dans une variante de réalisation (non représentée), la face interne 8 de chaque paroi de guidage 7b et la face interne 8' de chaque bord 7c pourraient être constituées directement par la paroi du guide, auquel cas on choisira de préférence un guide réalisé dans un matériau à faible coefficient de frottement et, par exemple, un guide en acier inoxydable ou un guide en matière plastique type PEHD (Polyéthylène haute densité). Dans la variante illustrée sur la figure 1, les faces internes 8 et 8' des parois de guidage 7b et des rebords 7c. sont pourvues d'un revêtement 9 à très faible coefficient de friction. Il s'agira par exemple d'un revêtement réalisé en polytétrafluoroéthylène (PTFE).

On a représenté sur les figures 1 et 2, une bouteille B, qui est suspendue sur les deux rails de guidage 5 par l'intermédiaire de sa collerette C. Dans cette position, sous l'action de son propre poids, la bouteille vient au contact de la face interne 8 des deux parois de guidage 7b du guide 6.

Plus précisément, si l'on se réfère à la figure 2, la distance d, qui sépare le point de sustentation de cette bouteille B (c'est à dire les guides sous col 5) et le guide 6, est réglée de telle sorte que lorsque la bouteille B est suspendue sur le guide sous col 5, elle vient sous l'action de son poids en contact avec la face intérieure des deux parois de guidage 7b du guide 6 en étant inclinée d'un angle de convoyage minimum A.

En cours de transport, sous l'action des jets d'air de transport J issus des fentes de soufflage 4, la bouteille est propulsée dans la direction SDT (figure 2). Du fait de la présence des deux parois de guidage 7b du guide 6, cette bouteille B est transportée de manière stable en étant inclinée vers l'arrière d'un angle minimum A, et on évite tout risque d'oscillation vers l'avant de la bouteille, qui pourrait être préjudiciable à la stabilité de convoyage. L'absence de balancement avant/arrière des bouteilles en cours de transport permet en outre avantageusement d'éviter les problèmes de marquage du col des bouteilles sous leur collerette au contact des guides sous col. Egalement, en transportant de manière inclinée vers l'arrière cette bouteille B, on limite les zones de contact entre la collerette C et les guides sous col 5, ce qui limite les frottements et améliore la convoyabilité des bouteilles. On limite en outre les phénomènes d'usure des guides sous col, qui sont principalement observés avec des guides sous col en matière plastique. Bien entendu, en cours de transport, la bouteille n'est pas nécessairement constamment au contact des deux parois de guidage 7b du guide 6, son angle d'inclinaison vers l'arrière par rapport à la verticale pouvant augmenter, ce qui est le cas par exemple lorsqu'une bouteille arrive au contact et s'enroule sur une bouteille précédente, tel que cela est illustré sur la figure 2 pour la bouteille B1 qui est dans ce cas inclinée vers l'arrière par rapport à la verticale d'un angle d'enroulement A' supérieur à l'angle de convoyage A.

En cours de transport normal des bouteilles B, les deux parois de guidage 7b permettent à la fois d'imposer mécaniquement aux bouteilles transportées B une inclinaison vers l'arrière d'un angle minimum de convoyage A , mais font également office de guidage latéral pour les bouteilles, en empêchant que les bouteilles B ne basculent d'un angle de balancement trop important dans un plan vertical et sensiblement transversal à leur direction de transport (c'est à dire dans le plan de la figure 1).

Le risque de balancement des bouteilles en cours de transport est le plus important dans les portions courbes du convoyeur (virages). En effet, dans ces portions courbes, les bouteilles ont tendance, sous l'effet de la force centrifuge, à décoller de la face interne des deux parois de guidage 7b en remontant vers l'arrière et à se décaler latéralement vers l'extérieur. La mise en oeuvre des bords relevés 7c sensiblement verticaux permet d'éviter en particulier dans les portions courbes, que les bouteilles ne sortent du guide 6. Pour une meilleure compréhension de la fonctionnalité des bords 7c du guide 6, on a représenté sur la figure 1, en pointillés, la base d'une bouteille B' dans sa position de balancement latéral maximum dans une courbe (angle D). Dans cette position, la base de la bouteille vient au contact à la fois de la partie supérieure de la paroi de guidage 7b et de la face interne de l'un des deux bords 7c, qui permet de maintenir cette bouteille B' à l'intérieur du guide 6.

Dans une variante plus simple de réalisation du guide 6, on pourrait toutefois concevoir un guide 6 ne comportant pas les deux bords 7c verticaux. Un tel guide à structure plus simple pourrait par exemple être utilisé dans les portions droites d'un convoyeur ou dans des portions courbes présentant un rayon de courbure important et pour lesquelles les angles de balancement latéral des bouteilles sont relativement faibles.

Dans la variante particulière de la réalisation de la figure 1, la face interne des deux parois de guidage 7b forme un plan PP incliné d'un angle E valant sensiblement 45°. Cette caractéristique, bien que préférentielle selon l'invention, n'est toutefois pas limitative de l'invention. Dans une autre réalisation, cet angle pourrait être plus ou moins important. Il n'est en outre pas indispensable que la face interne des deux parois de guidage 7b forme un plan, cette face interne pouvant dans d'autres variantes avoir une forme courbe quelconque, notamment convexe ou concave.

Conformément à une caractéristique préférentielle mais non limitative de l'invention, le guide longitudinal inférieur 6 est ajustable en position dans un plan vertical, ce qui permet de régler la distance d séparant le guide 6 et les guides sous col 5. L'ajustement en hauteur du guide 6 est obtenu dans la réalisation de la figure 1 au moyen d'une pluralité de vérins 11 qui sont montés sur un bâti 10 fixe par rapport au sol, et qui sont répartis judicieusement sur la longueur du guide 6. Le guide 6 est fixé par tout moyen approprié sur la tige 11' de chaque vérin 11. Dans l'exemple illustré, les tiges 11' des vérins 11 sont fixées sur le fond 7a du guide 6. Le déplacement de la tige 11' des vérins 11 permet d'ajuster la position en hauteur du guide 6 par rapport aux guides sous col 5, c'est-à-dire, dans l'exemple de réalisation de la figure 1, par rapport au point de sustentation des bouteilles par l'intermédiaire de leur collerette C. Cette caractéristique permet avantageusement de réaliser un convoyeur à air multi-formats, c'est à dire un convoyeur pouvant facilement être adapté pour transporter des bouteilles de forme et de dimensions variées. Il est ainsi possible en réduisant la distance d de transporter de manière fiable des bouteilles de plus faibles dimensions que la bouteille B illustrée sur la figure 1 et par exemple des bouteilles telles que la bouteille B" illustrée en pointillés sur la figure 1. Egalement, on comprend qu'en réglant la distance d séparant le guide 6 du point de sustentation supérieur des bouteilles, on réalise simultanément et de manière simple deux réglages au moyen des parois de guidage 7b : on règle l'angle de convoyage minimum A des bouteilles ; on ajuste le guidage latéral des bouteilles en fonction de la forme et de la dimension des bouteilles.

Il revient à l'homme du métier de régler au cas par cas la distance d séparant le guide longitudinal inférieur 6 du point de sustentation des bouteilles, en sorte d'obtenir un angle de convoyage minimum A qui permet d'obtenir la meilleure convoyabilité des bouteilles. En pratique, après avoir réalisé des essais avec différents formats de bouteilles, il a été constaté que pour la plupart des bouteilles existant sur le marché, on obtenait un transport des bouteilles dans des conditions optimales en réglant l'angle minimum de convoyage A entre 2° et 20°, et de préférence entre 5° et 10°, le choix de l'angle dans cette fourchette de valeurs devant être fait au cas par cas de manière empirique par l'homme du métier pour un type donné de bouteilles. Ces valeurs d'angle minimum de convoyage A sont toutefois données à titre purement indicatif, et ne sont pas limitatives de l'invention, l'invention pouvant être mise en oeuvre avec des angles minimum de convoyage A en dehors de la fourchette de valeurs précitée.

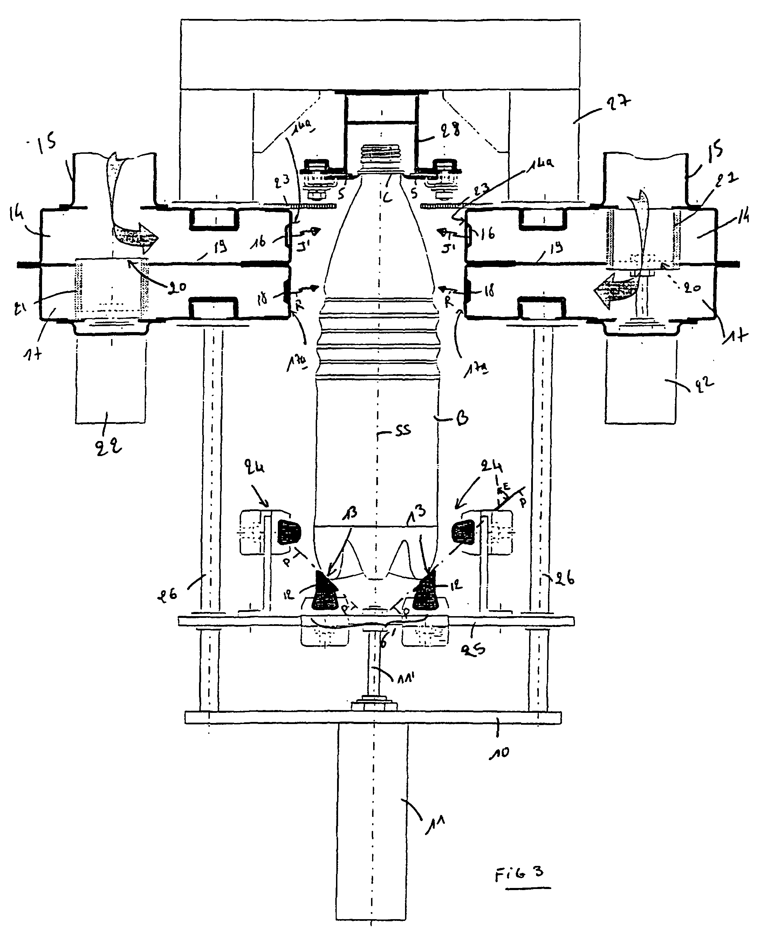

On a représenté à la figure 3 une autre variante de réalisation d'un convoyeur à air dans lequel le guide longitudinal inférieur 6' est réalisé sous la forme de deux profilés longitudinaux identiques 12 montés parallèlement l'un à l'autre, et comportant chacun une partie plane longitudinale 13. Ces deux profilés 12 sont montés de telle sorte que les parties planes 13 soient en vis à vis l'une de l'autre et forment chacune un plan PP incliné par rapport à la verticale d'un angle E. Ces deux parties planes 13 correspondent et remplissent la même fonction que les faces internes 8 des deux parois de guidage 7b du guide 6 de la figure 1. De préférence, les deux profilés 12 sont réalisés dans un matériau à faible coefficient de frottement et par exemple en matière plastique type PE(Polyéthylène).

Dans la variante de la figure 3, contrairement à celle de la figure 1, le transport sous l'action de jets d'air des bouteilles le long du convoyeur n'est pas réalisé aux moyens de jets d'air de transport supérieurs générés au dessus du point de sustentation des bouteilles (guide sous col 5) mais est réalisé exclusivement par un soufflage latéral au moyen de jets d'air de transport J' qui sont dirigés sur les bouteilles au dessous de leur point de sustentation. Plus particulièrement, dans la variante particulière de réalisation illustrée à la figure 3, les guides sous col 5 sont fixés rigidement sur un rail 28 formant un capotage fermé à l'exception de sa face inférieure qui est ouverte, ce capotage permettant de protéger le goulot des bouteilles au dessus de leur collerette. Pour la formation des jets d'air de transport J', le convoyeur comprend deux gaines de soufflage 14, qui sont disposées de part et d'autre du trajet des bouteilles B. Chaque gaine est prévue pour être alimentée en air sous pression via un conduit d'alimentation automatique 15. Chaque gaine de soufflage 14 comprend en outre une face 14a longitudinale qui est orientée vers les bouteilles et dans laquelle sont ménagées des fentes ou ouvertures de soufflage 16, similaires aux fentes ou ouvertures de soufflage 4 du convoyeur de la figure 1.

Le convoyeur à air de la figure 3 comporte également deux gaines de soufflage supplémentaires 17 qui sont conçus pour générer des jets d'air inférieurs inverses R en direction des bouteilles, c'est à dire des jets d'air orientés sur les bouteilles au-dessous de leur point de sustentation, mais dans une direction opposée au sens de transport SDT des bouteilles. A cet effet, chaque gaine de soufflage 17 comporte également au niveau de sa face 17a orientée vers les bouteilles une pluralité de fentes de soufflage 18.

Dans la variante particulière illustrée sur la figure 3, une gaine de soufflage 14 et une gaine de soufflage 17 sont réalisées au moyen d'un même caisson séparé en deux compartiments supérieur et inférieur par une tôle de séparation 19, le compartiment supérieur formant la gaine de soufflage 14 pour la formation des jets de transport J' et le caisson inférieur formant la gaine de soufflage 17 pour la formation des jets d'air inverses R. Dans une autre variante, les positions des gaines de soufflage 14 et 17 pourraient être inversées. Egalement, les gaines de soufflage 14 et 17 pourraient être constituées par deux caissons séparés, pouvant être alimentés en air sous pression de manière indépendante ou non. Dans la variante de la figure 3, l'alimentation en air sous pression de la gaine de soufflage 17 est réalisée par l'intermédiaire de la gaine 14 et d'une ouverture d'admission 20 prévue dans la paroi de séparation 19. Au niveau de cette ouverture d'admission 20 est monté un tiroir de distribution d'air 21 prévu pour être actionné entre une position haute et une position basse par un vérin 22. Dans la position haute (position du tiroir 21 de droite sur la figure 3), le tiroir 21 raccorde le conduit d'admission d'air 15 à l'ouverture 20, isolant l'intérieur de la gaine de soufflage 14 du conduit d'admission 15, et raccordant l'intérieur de la gaine de soufflage 17 directement avec ce conduit d'admission 15, ce qui permet de générer des jets d'air inverses R en direction des bouteilles. A l'inverse, en position basse, tel que dans la position du tiroir 21 de gauche sur la figure 3, l'intérieur de la gaine de soufflage 17 est isolé du conduit d'admission 15, lequel permet l'alimentation en air de la gaine de soufflage 14 et par là même la formation de jets d'air de transport J' en direction des bouteilles.

En fonctionnement, les tiroirs 21 de gauche et de droite seront soit en position haute (génération de jets d'air inverses R sur les bouteilles pour par exemple débloquer, ou ralentir et éventuellement stopper de manière aéraulique les bouteilles dans un tronçon donné du convoyeur), soit en position basse (génération de jets d'air de transport J' en direction des bouteilles) pour propulser les bouteilles dans le sens de transport normal SDT. Il est également possible avec le convoyeur de la figure 3, d'inverser le sens de transport normal des bouteilles dans le convoyeur, les rôles des jets d'air issus des gaines de soufflage 14 et 17 étant dans ce cas inversé. Le convoyeur est ainsi parfaitement réversible d'un point de vue du sens de transport normal des bouteilles, et ce de manière aisée et rapide, sans nécessiter de modification structurelle du convoyeur.

Dans la variante de la figure 3, les gaines de soufflage 14 et 17 sont alimentées à partir de la même source d'air sous pression. Dans une autre variante, on pourrait alimenter ces gaines de soufflage de manière indépendante à partir de sources d'air différentes. Egalement, il est envisageable dans une autre variante de réalisation, d'alimenter les gaines de soufflage 14 et les deux gaines de soufflage 17 à partir d'une même source d'air sous pression, mais en distribuant l'air non pas au moyen de tiroirs 21, mais en alimentant chaque gaine de soufflage 14 ,17 par des raccords secondaires raccordés à la source d'air commune, chaque raccord secondaire étant équipé d'un registre, ou de tout autre moyen équivalent, permettant de contrôler l'alimentation en air de la gaine correspondante.

Un des avantages du convoyeur à air de la figure 3 par rapport au convoyeur de la figure 1 est lié au fait que les jets d'air (de transport J' ou inverses R) sont dirigés sur les bouteilles dans une zone située au dessous de leur point de sustentation, ce qui limite les risques que l'air puisse être en contact direct avec le goulot des bouteilles et/ou puisse pénétrer à l'intérieur des bouteilles B et venir les contaminer. A l'inverse, dans le cas du convoyeur de la figure 1, afin d'éviter les risques de contamination de l'intérieur des bouteilles transportées par les jets d'air de transport J, il est impératif de filtrer avec toutes les précautions requises l'air qui est introduit sous pression à l'intérieur de la gaine de soufflage 1, ce qui nécessite la mise en oeuvre de filtres haute performance qui sont onéreux. Dans le cas de la figure 3, sachant que les jets d'air ne sont pas générés au dessus de la collerette, les risques de contamination sont diminués. En outre, afin de diminuer encore ces risques, le convoyeur à air est équipé de deux parois de déflexion 23 disposées de part et d'autres du trajet des bouteilles, et permettant de faire obstacle à une remontée d'air issue des gaines de soufflage 14 et 17 vers le goulot des bouteilles B.

Dans la variante de la figure 3, le guide 6' ne comporte pas de portions remplissant la fonction précédemment décrite des bords relevés 7c du guide 6 de la figure 1. Néanmoins, le convoyeur de la figure 3 comporte deux guides latéraux 24, qui sont positionnés à proximité du guide 6' et qui permettent notamment dans les portions courbes du convoyeur de limiter l'angle de débattement latéral des bouteilles et d'éviter que les bouteilles ne sortent accidentellement du guide 6'.

Il convient de souligner qu'antérieurement à l'invention, il était déjà connu de transporter des bouteilles suspendues sous l'action de jets d'air générés au dessous du point de sustentation des bouteilles et d'obtenir l'avantage précité, c'est-à-dire limiter les risques que l'air puisse être en contact direct avec le goulot des bouteilles et/ou puisse pénétrer à l'intérieur des bouteilles B et venir les contaminer. Cependant, jusqu'à ce jour, ce soufflage inférieur était réalisé au détriment du bon convoyage des bouteilles, celles-ci ayant tendance sous l'action des jets d'air de transport à osciller vers l'avant d'un angle plus important comparativement à un soufflage réalisé exclusivement au dessus de la collerette tel que dans le cas du convoyeur de la figure 1. Grâce à la mise en oeuvre d'un guide longitudinal inférieur conforme à l'invention, cet inconvénient est à présent supprimé. En effet, le soufflage inférieur (jets d'air J' sur la figure 3) permet d'appliquer une force de poussée aéraulique sur les bouteilles entre deux points d'appui (appui supérieur sur les guides sous col 5 et appui inférieur sur le guide longitudinal 6') et par là même de réaliser un convoyage parfaitement stable des bouteilles. La stabilité des bouteilles en cours de transport est obtenue quels que soient la puissance aéraulique mise en jeu et le point d'application de la force de poussée aéraulique, c'est à dire en d'autres termes la puissance et la position des jets d'air de transport par rapport au corps de la bouteille.

Plus particulièrement, dans l'exemple de réalisation de la figure 3, de manière similaire à l'exemple de la figure 1, la position relative du guide longitudinal inférieur 6' formé par les deux profilés 12, de même que la position relative des guides latéraux 24, sont réglables en hauteur par rapport aux guides sous col 5. Cet ajustement en hauteur est obtenu en montant le guide 6' et les guides latéraux 24 sur une coulisse 25 mobile selon un axe vertical entre deux colonnes 26, par l'intermédiaire de vérins 11, dont la tige 11' est reliée rigidement par tout moyen approprié à la coulisse 25. Les vérins 11, le bâti 10, les colonnes 26, les gaines de soufflage 14 et17, les pontets 27 et le rail 28 supportant les guides sous col 5 forment un ensemble fixe par rapport au sol.

On a représenté sur la figure 4 une autre variante de réalisation, qui est assez proche de la variante de la figure 3 et qui s'en différencie essentiellement par le fait que le guide longitudinal inférieur 6' constitué par les deux profilés 12 et les deux guides latéraux 24 sont fixes en position par rapport au sol et que le réglage de distance séparant les deux guides sous col 5 de ce guide 6' et des guides latéraux 24 est réalisé en modifiant la position par rapport au sol des guides sous col 5. A cet effet, le rail 28 supportant les guides sous col 5 est mobile selon un axe vertical en étant monté sur une pluralité de coulisses 25 qui sont judicieusement répartis sur la longueur du convoyeur et qui sont mobiles verticalement entre deux colonnes 26. Chaque coulisse 25 peut être déplacée verticalement au moyen d'un vérin 11 dont la tige 11' est reliée rigidement par tout moyen approprié à la coulisse 25. Les vérins 11, le bâti 10, les colonnes 26, les gaines de soufflage 14 et 17, les pontets 29, le guide inférieur 6' et les guides latéraux 24 forment un ensemble rigide et fixe par rapport au sol.

L'ajustement en hauteur, dans la variante de la figure 3 du guide longitudinal inférieur 6' et des guides latéraux 24, et dans la variante de la figure 4 des guides sous col 5, peut indifféremment selon l'invention être commandé de manière automatique ou manuelle.

## Revendications

1. Convoyeur à air et article apte à être suspendu sur le convoyeur, ledit convoyeur comportant des moyens de formation de jets d'air de transport pour la propulsion de l'article le long du convoyeur, **caractérisés en ce que** le convoyeur comporte un guide longitudinal inférieur (6 ; 6') qui s'étend le long du trajet de l'article, et qui est positionné par rapport au point de sustentation de l'article de telle sorte qu'une fois suspendu sur le convoyeur, l'article vient au contact au niveau de sa base avec ledit guide en étant maintenu incliné par rapport à la verticale et vers l'arrière par rapport au sens de transport, et **en ce que** les moyens de formation des jets d'air de transport sont conçus en sorte de générer au moins des jets d'air inférieurs (J') qui sont dirigés sur l'article au dessous de son point de sustentation.

2. Convoyeur et article selon la revendication 1 **caractérisés en ce que** le guide longitudinal inférieur (6 ; 6') comprend deux parois de guidage longitudinales en vis à vis (7b ; 13).

3. Convoyeur et article selon la revendication 2 **caractérisés en ce que** chaque paroi de guidage (7b ; 13) du guide longitudinal inférieur (6 ;6') comporte une face interne plane qui forme un plan incliné (PP) par rapport à la verticale, les plans (PP) formés par les deux parois de guidage convergeant l'un vers l'autre vers le bas.

4. Convoyeur et article selon la revendication 3 **caractérisés en ce que** les plans inclinés (PP) formés par les faces internes des deux parois de guidage du guide longitudinal sont inclinés par rapport à la verticale d'un même angle (E).

5. Convoyeur et article selon la revendication 4 **caractérisés en ce que** l'angle (E) vaut sensiblement 45°.

6. Convoyeur et article selon l'une quelconque des revendications 1 à 5 **caractérisés en ce que** le convoyeur comprend deux guides latéraux (7c ; 24) permettant de limiter le débattement latéral de l'article.

7. Convoyeur et article selon la revendication 6 **caractérisés en ce que** les deux guides latéraux sont formés par deux bords supérieurs (7c) du guide longitudinal (6).

8. Convoyeur et article selon la revendication 7 **caractérisés en ce que** la face interne (8') de chaque bord supérieur (7c) du guide (6) forme un plan (P'P') sensiblement vertical.

9. Convoyeur et article selon l'une quelconque des revendications 1 à 8 **caractérisés en ce que** la position du guide longitudinal inférieur (6 ; 6') par rapport au point de sustentation de l'article est telle que l'angle minimum de convoyage (A) de l'article est compris entre 2° et 20°, et de préférence entre 5° et 10°.

10. Convoyeur et article selon l'une quelconque des revendications de 1 à 9 **caractérisé en ce que** le convoyeur est équipé de moyens de réglage de la distance (d) séparant selon une direction verticale le guide longitudinal inférieur (6 ;6') et le point de sustentation de l'article.

11. Convoyeur et article selon la revendication 10 **caractérisés en ce que** les moyens de réglage comportent une pluralité de vérins (11) répartis le long du convoyeur.

12. Convoyeur et article selon l'une quelconque des revendications 1 à 11 **caractérisés en ce que** les moyens de formation des jets d'air de transport pour la propulsion de l'article le long du convoyeur sont conçus en sorte de générer exclusivement des jets d'air inférieurs (J') qui sont dirigés sur l'article au dessous de son point de sustentation.

13. Convoyeur et article selon la revendication 1 ou 12 **caractérisés en ce que** le convoyeur comprend, pour la formation des jets d'air de transport inférieurs, au moins deux gaines de soufflage (14) qui s'étendent de part et d'autre du trajet de l'article, qui sont prévues pour être alimentées en air sous pression, et qui comportent chacune une face (14a) orientée vers l'article dans laquelle sont ménagées des fentes ou ouvertures de soufflage (16) pour l'échappement de l'air sous pression à l'intérieur de la gaine sous la forme de jets d'air de transports inférieurs (J').

14. Convoyeur et article selon l'une quelconque des revendications 1 à 14 **caractérisés en ce que** le convoyeur comprend des moyens permettant de générer des jets d'air inverses (R) orientés dans la direction opposée au sens de transport (SDT) de l'article.

15. Convoyeur et article selon la revendication 14 **caractérisés en ce que** les jets d'air inverses (R) sont dirigés sur l'article au dessous de son point de sustentation

16. Convoyeur et article selon la revendication 15 **caractérisés en ce que** les moyens de formation des jets d'air inverses comportent deux gaines de soufflage (17) qui s'étendent de part et d'autre du trajet de l'article, qui sont prévues pour être alimentées en air sous pression, et qui comportent chacune une face (17a) orientée vers l'article dans laquelle sont ménagées des fentes ou ouvertures de soufflage (18) pour l'échappement de l'air sous pression à l'intérieur de la gaine sous la formes de jets d'air inverses (R).

17. Convoyeur et article selon les revendications 13 et 16 **caractérisés en ce que** la gaine de soufflage (14) pour la formation des jets d'air de transport (J') et la gaine de soufflage (17) pour la formation des jets d'air inverses (R) sont constituées respectivement par les deux compartiments superposés d'un caisson de soufflage.

18. Convoyeur et article selon la revendication 17 **caractérisés en ce que** la distribution d'air entre les deux gaines de soufflage (14,17) d'un caisson est réalisée au moyen de distributeurs à tiroir (21) actionné par vérin (22).

19. Procédé de transport d'un article suspendu sur un convoyeur à air, au cours duquel l'article est propulsé le long du convoyeur sous l'action de jets d'air de transport, **caractérisé en ce qu'**on guide l'article au niveau de sa base en sorte de le maintenir incliné par rapport à la verticale et vers l'arrière par rapport au sens du transport, et **en ce qu'**au moins une partie (J') des jets d'air de transport est dirigée sur l'article au dessous de son point de sustentation.

20. Procédé selon la revendication 19 **caractérisé en ce que** tous les jets d'air de transport (J') sont dirigés au dessous du point de sustentation de l'article.

## Patentansprüche

1. Luftförderer und Artikel, der geeignet ist, auf dem Förderer aufgehängt zu werden, wobei dieser Förderer Mittel zur Bildung von Transportluftstrahlen für den Antrieb des Artikels entlang dem Förderer umfasst, **dadurch gekennzeichnet, dass** der Förderer eine untere Längsführung (6; 6') umfasst, die sich entlang dem Weg des Artikels erstreckt, und die derart in Bezug auf den Tragepunkt des Artikels angeordnet ist, dass der Artikel, wenn er auf dem Förderer aufgehängt ist, auf der Höhe seiner Basis mit dieser Führung in Kontakt kommt, wobei er in Bezug auf die Vertikale geneigt und in Bezug auf die Transportrichtung nach hinten gehalten wird, und **dadurch**, dass die Mittel zur Bildung der Transportluftstrahlen darauf ausgerichtet sind, mindestens untere Luftstrahlen (J') zu erzeugen, die unter seinem Tragepunkt auf den Artikel gerichtet werden.

2. Förderer und Artikel nach Anspruch 1, **dadurch gekennzeichnet, dass** die untere Längsführung (6; 6') zwei gegenüberliegende Längsführungswände (7b; 13) umfasst.

3. Förderer und Artikel nach Anspruch 2, **dadurch gekennzeichnet, dass** jede Führungswand (7b; 13) der unteren Längsführung (6; 6') eine ebene Innenseite umfasst, die eine in Bezug auf die Vertikale geneigte Ebene (PP) bildet, wobei die Ebenen (PP), die durch die zwei Führungswände gebildet werden, nach unten aufeinander zulaufen.

4. Förderer und Artikel nach Anspruch 3, **dadurch gekennzeichnet, dass** die geneigten Ebenen (PP), die durch die Innenseiten der zwei Führungswände der Längsführung gebildet werden, in Bezug auf die Vertikale in einem gleichen Winkel (E) geneigt sind.

5. Förderer und Artikel nach Anspruch 4, **dadurch gekennzeichnet, dass** der Winkel (E) im Wesentlichen 45° beträgt.

6. Förderer und Artikel nach einem der Ansprüche 1 bis 5, **dadurch gekennzeichnet, dass** der Förderer zwei Seitenführungen (7c; 24) umfasst, die das Einschränken des seitlichen Ausschlags des Artikels ermöglichen.

7. Förderer und Artikel nach Anspruch 6, **dadurch gekennzeichnet, dass** die zwei Seitenführungen durch zwei obere Ränder (7c) der Längsführung (6) gebildet sind.

8. Förderer und Artikel nach Anspruch 7, **dadurch gekennzeichnet, dass** die Innenseite (8') von jedem oberen Rand (7c) der Führung (6) eine Ebene (P'P') bildet, die im Wesentlichen vertikal ist.

9. Förderer und Artikel nach einem der Ansprüche 1 bis 8, **dadurch gekennzeichnet, dass** die Position der unteren Längsführung (6; 6') in Bezug auf den Tragepunkt des Artikels derart ist, dass der Mindestförderungswinkel (A) des Artikels zwischen 2° und 20° und vorzugsweise zwischen 5° und 10° enthalten ist.

10. Förderer und Artikel nach einem der Ansprüche 1 bis 9, **dadurch gekennzeichnet, dass** der Förderer mit Mitteln zur Einstellung der Distanz (d), die die untere Längsführung (6; 6') und den Tragepunkt des Artikels in einer vertikalen Richtung trennt, ausgestattet ist.

11. Förderer und Artikel nach Anspruch 10, **dadurch gekennzeichnet, dass** die Mittel zur Einstellung mehrere Hebeeinrichtungen (11) umfassen, die entlang dem Förderer verteilt sind.

12. Förderer und Artikel nach einem der Ansprüche 1 bis 11, **dadurch gekennzeichnet, dass** die Mittel zur Bildung der Transportluftstrahlen für den Antrieb des Artikels entlang dem Förderer darauf ausgerichtet sind, ausschließlich untere Luftstrahlen (J') zu erzeugen, die unterhalb von seinem Tragepunkt auf den Artikel gerichtet werden.

13. Förderer und Artikel nach Anspruch 1 oder 12, **dadurch gekennzeichnet, dass** der Förderer für die Bildung der unteren Transportluftstrahlen mindestens zwei Blaskanäle (14) umfasst, die sich auf beiden Seiten des Wegs des Artikels erstrecken, die vorgesehen sind, um mit Luft unter Druck versorgt zu werden, und von denen jeder eine auf den Artikel ausgerichtete Seite (14a) umfasst, in der Schlitze oder Blasöffnungen (16) für das Ausströmen der Luft unter Druck innerhalb des Kanals in der Form von unteren Transportluftstrahlen (J') angeordnet sind.

14. Förderer und Artikel nach einem der Ansprüche 1 bis 14, **dadurch gekennzeichnet, dass** der Förderer Mittel umfasst, die das Erzeugen von umgekehrten Luftstrahlen (R) ermöglichen, die in die der Transportrichtung (SDT) des Artikels entgegengesetzte Richtung ausgerichtet sind.

15. Förderer und Artikel nach Anspruch 14, **dadurch gekennzeichnet, dass** die umgekehrten Luftstrahlen (R) unter seinem Tragepunkt auf den Artikel gerichtet werden.

16. Förderer und Artikel nach Anspruch 15, **dadurch gekennzeichnet, dass** die Mittel zur Bildung der umgekehrten Luftstrahlen zwei Blaskanäle (17) umfassen, die sich auf beiden Seiten des Wegs des Artikels erstrecken, die vorgesehen sind, um mit Luft unter Druck versorgt zu werden, und von denen jeder eine auf den Artikel ausgerichtete Seite (17a) umfasst, in der Schlitze oder Blasöffnungen (18) für das Ausströmen der Luft unter Druck innerhalb des Kanals in der Form von umgekehrten Luftstrahlen (R) angeordnet sind.

17. Förderer und Artikel nach Anspruch 13 und 16, **dadurch gekennzeichnet, dass** der Blaskanal (14) für die Bildung der Transportluftstrahlen (J') und der Blaskanal (17) für die Bildung der umgekehrten Luftstrahlen (R) jeweils durch die zwei übereinanderliegenden Fächer eines Blaskastens gebildet werden.

18. Förderer und Artikel nach Anspruch 17, **dadurch gekennzeichnet, dass** die Luftverteilung zwischen den beiden Blaskanälen (14, 17) eines Kastens mittels Schieberventilen (21), die durch eine Hebeeinrichtung (22) betätigt werden, ausgeführt wird.

19. Verfahren zum Transport eines Artikels, der auf einem Luftförderer aufgehängt ist, während dem der Artikel unter dem Einfluss von Transportluftstrahlen entlang dem Förderer angetrieben wird, **dadurch gekennzeichnet, dass** der Artikel auf der Höhe seiner Basis geleitet wird, derart, dass er in Bezug auf die Vertikale geneigt und in Bezug auf die Transportrichtung nach hinten gehalten wird, und **dadurch**, dass mindestens ein Teil (J') der Transportluftstrahlen unter seinem Tragepunkt auf den Artikel gerichtet wird.

20. Verfahren nach Anspruch 19, **dadurch gekennzeichnet, dass** alle Transportluftstrahlen (J') unter den Tragepunkt des Artikels gerichtet werden.

## Claims

1. An air conveyor and an item adapted to be suspended on the conveyor, said conveyor comprising transport air jet forming means for the propulsion of the item along the conveyor, **characterized in that** the conveyor comprises a lower longitudinal guide (6 ; 6') which extends along the item path, and which is positioned with respect to the item sustaining point such that once suspended on the conveyor, the item should be brought in contact at its base level with said guide while being maintained tilted with respect to the vertical and to the rear with respect to the transport direction, and **in that** the transport air jet forming means are designed in order to generate at least lower air jets (J') which are directed to the item below the sustaining point thereof.

2. The conveyor and article according to claim 1, **characterized in that** the lower longitudinal guide (6; 6') comprises two facing longitudinal guiding walls (7b; 13).

3. The conveyor and article according to claim 2, **characterized in that** each guiding wall (7b; 13) of the lower longitudinal guide (6; 6') comprises a flat internal face which forms a tilted plane (PP) with respect to the vertical, the planes (PP) formed by the two guiding walls converging one to the other downwards.

4. The conveyor and article according to claim 3, **characterized in that** the tilted planes (PP) formed by the internal faces of both guiding walls of the longitudinal guide are tilted with respect to the vertical with a same angle (E).

5. The conveyor and article according to claim 4, **characterized in that** the angle (E) is substantially 45°.

6. The conveyor and article according to any of claims 1 to 5, **characterized in that** the conveyor comprises two side guides (7c; 24) allowing to limit the side course of the item.

7. The conveyor and article according to claim 6, **characterized in that** both side guides are formed by two upper edges (7c) of the longitudinal guide (6).

8. The conveyor and article according to claim 7, **characterized in that** the internal face (8') of each upper edge (7c) of the guide (6) forms a substantially vertical plane (P'P').

9. The conveyor and article according to any of claims 1 to 8, **characterized in that** the position of the lower longitudinal guide (6 ; 6') with respect to the item sustaining point is such that the minimum item conveying angle (A) is comprised between 2° and 20°, and preferably between 5° and 10°.

10. The conveyor and article according to any of claims 1 to 9, **characterized in that** the conveyor is provided with control means (d) for the distance separating in a vertical direction the lower longitudinal guide (6 ;6') and the item sustaining point.

11. The conveyor and article according to claim 10, **characterized in that** the control means comprise a plurality of jacks (11) distributed along the conveyor.

12. Conveyor and article according to any of the claims 1 to 11, **characterized in that** the transport air jet forming means for the propulsion of the item along the conveyor are designed in order to generate exclusively lower air jets (J') which are directed to the item below the sustaining point thereof.

13. The conveyor and article according to claim 1 or 12, **characterized in that** the conveyor comprises, for the formation of the lower transport air jets, at least two blowing sheaths (14) that extend on both sides of the item path, which are provided to be supplied with air under pressure, and which comprise each one face (14a) oriented towards the item in which are provided blowing slots or openings (16) for the air intake under pressure within the sheath as lower transport air jets (J').

14. The conveyor and article according to any of claims 1 to 14, **characterized in that** the conveyor comprises means allowing the generation of reverse air jets (R) oriented in the opposite direction to the item transport direction (SDT).

15. The conveyor and article according to claim 14, **characterized in that** the reverse air jets (R) are directed towards the item below the sustaining point thereof.

16. The conveyor and article according to claim 15, **characterized in that** the reverse air jet forming means comprise two blowing sheaths (17) which extend on both sides of the item path, which are provided to be supplied by pressurized air, and which comprise each a face (17a) oriented towards the item and in which are provided blowing slots or openings (18) for the air intake under pressure within the sheath as reverse air jets (R).

17. The conveyor and article according to claims 13 and 16, **characterized in that** the blowing sheath (14) for forming transport air jets (J') and the blowing sheath (17) for forming reverse air jets (R) are respectively formed by the two superimposed compartments of a blowing box.

18. The conveyor and article according to claim 17, **characterized in that** the air distribution between the two blowing sheaths (14, 17) of a box is performed by means of a jack-actuated (22) slide distributor (21).

19. Method for transporting an item suspended on an air conveyor, during which the item is propelled along the conveyor under the action of transport air jets, **characterized in that** the item is guided at its base level in order to maintain tilted with respect to the vertical and to the rear with respect to the transport direction, and **in that** at least one part (J') of the transport air jets is directed towards the item below the sustaining point thereof.

20. Method according to claim 19, **characterized in that** all the transport air jets (J') are directed below the item sustaining point.
